# EUROPEAN PATENT APPLICATION

(11) **EP 1 267 254 A2**
(43) Date of publication of application: **18.12.2002**
(21) Application number: 02001272.0
(22) Date of filing: 17.01.2002
(51) Int. Cl.: G06F 3/12

(54) **Document printing using format-specific translation modules**

(30) Priority: 11.06.2001 US 879400
(71) Applicant: Hewlett-Packard Company, Palo Alto, CA 94304 (US)
(72) Inventor: Pochuev, Denis A., Camas, WA 98607 (US); Hall, David M., Camas, WA 98607 (US); Revel, Daniel, Portland, OR 97211 (US); Bunn, Jeremy, Kelso, WA 98626 (US); Staas, David, Vancouver, WA 98684 (US)
(74) Representative: Liesegang, Eva

(57) **Abstract**

The present invention provides a printer (32) including a print processor (41) that is configured to convert an electronic document (25) from a native format to a print-ready format.

## Description

### Field of the Invention

The present invention relates generally to printers and more particularly, to a printer, a printing system, and a printing method where an electronic document to be printed is converted from a native application format to a print-ready format by a printer using a print processor.

### Background of the Invention

The advent of the personal computer was accompanied by the promise that it would create a "paperless" office. This promise has remained unfulfilled, and most computer users remain utterly dependent upon their printers, in one form or another, in order to generate permanent records, print out their correspondence, or even review their work.

In the conventional printing systems currently employed, an electronic document in a computer, typically in a format that is specific for the application in which it was prepared, is selected for printing. The computer selects the appropriate printer driver, converts the document into a printer language format, and sends it to the selected printer. The printer, upon receiving the document, converts it further into a data format that can be sent directly to the print engine for application to the print medium.

This system is advantageous in many instances because it minimizes the size of the document for the transmission from the computer to the printer, typically via a wire connection with a relatively slow data transfer rate. In addition, this system utilizes the fairly powerful computer processor to perform as much format conversion as possible in order to maximize the speed of the print operation.

However, smaller and lighter portable devices, such as laptop computers, personal digital assistants, and cellular phones with Internet connections have become increasingly more desirable. The electronics industry has responded by attempting to maximize the efficiency of both processor use and battery life in such portable devices. At the same time, an increasing number of specialized applications are being developed, typically requiring multiple individual printer drivers be stored and executed in order to utilize existing printers. It would be advantageous to be able to minimize the demand on the processor and memory, and in particular power consumption, when printing from portable devices, no matter what application the device is utilizing.

What is needed is a way to print from a variety of devices, running a variety of applications, without the necessity of performing a processor-intensive conversion in the device, or taking up additional memory in the device with multiple printer drivers. By utilizing the print processor to effect document format conversions, the printing system and method of the invention permits highly flexible printing from a variety of devices, without the requirement that such devices have each appropriate printer driver installed. The method of the invention also minimizes demands on the device itself, which may have limited processor power and battery life.

### Summary of the Invention

The present invention provides a printer including a print processor that is configured to convert an electronic document from a native format to a print-ready format.

### Brief Description of the Drawings

Fig. 1 is a schematic showing a typical printing system.
Fig. 2 is a schematic showing the document format conversion process used in a typical printing system.
Fig. 3 is a schematic showing a printing system according to one embodiment of the present invention.
Fig. 4 is a schematic showing the document format conversion process according to one embodiment of the present invention.
Fig. 5 is a flowchart depicting the method of printing an electronic document according to one embodiment of the present invention.

### Detailed Description of the Invention

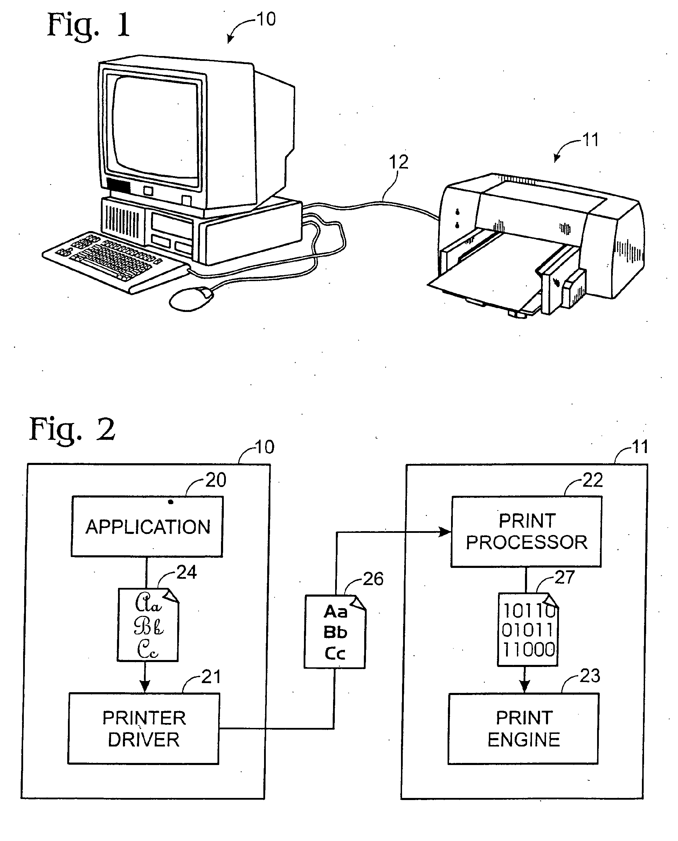

A typical printing system for printing electronic documents is shown in Fig. 1. A computer 10 and a printer 11 are linked via a connection 12. The connection 12 is typically a cable, such as a parallel communications cable, a USB cable, or other communications cabling as known in the art. Alternatively, the connection 12 is an indirect connection, such as via a local area network, a wide area network, or other communications link.

Electronic documents on computer systems are typically associated with an application program. The application is typically used to create or edit the document, or it is used for viewing or printing the document. As shown in Fig. 2, for a typical printing system, when a document is selected to be printed, the corresponding application 20 (present in computer 10) converts the document to a format that is specific for both the operating system used by the computer, and the printer driver 21 that will send the document to the selected printer. One such format, used by the WINDOWS operating system (Microsoft Corporation) to represent graphical objects and transmit them to output devices, is the Graphical Device Interface format (or GDI).

Printer driver 21 receives the document 24 in the operating-system and printer-driver specific format, and converts it into a document 26 in a printer-language format. Typically, the printer-language format document 26 exists in a page description language, or PDL. Such formats include bit-mapped documents (or raster graphics), or object-based documents (or vector graphics). Selected page description languages include POSTSCRIPT (Adobe Systems Incorporated) and various versions of PCL (Printer Control Language, Hewlett-Packard Company).

The printer-language formatted document 26 (in a PDL) is received by the printer 11, only to be converted by a print processor 22 to a document 27 in a print-ready format suitable for sending to the print engine 23 of the printer. The print processor controls communication to and from the printer, and controls the print engine 23. As used herein, the "print engine" refers to the components of the printer that actually perform the printing, that is, that place the desired image onto the print medium. The print engine may be a dot-matrix print engine, an ink-jet print engine, or an electrophotographic print engine (such as in a laser printer). The print-ready format corresponds to the data stream that is interpreted by the print engine so that it may then produce the desired image on the print medium. The print-ready format is alternatively referred to as 'printer-ready bits'.

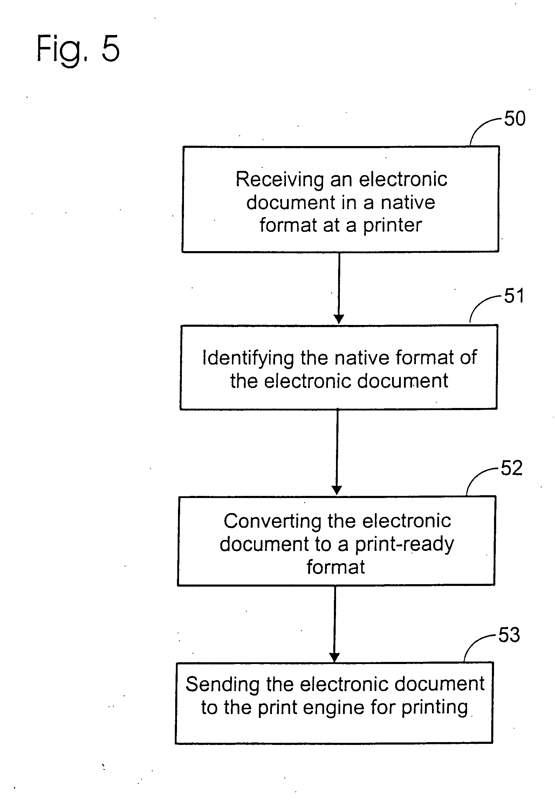

In contrast to the printing system described above, the method of the present invention is depicted in the flowchart of Fig. 5. The method includes the steps of receiving 50 an electronic document in a native format at a printer, identifying 51 the native format of the electronic document, converting 52 the electronic document to a print-ready format, and sending 53 the electronic document to a print engine for printing.

By "native format" is meant any document format that is specific for and used by a particular application. For example, the format used by the application when it saves an electronic document to a file is a native format. Such native formats are typically optimized for storage, and are typically not configured for a particular printer driver.

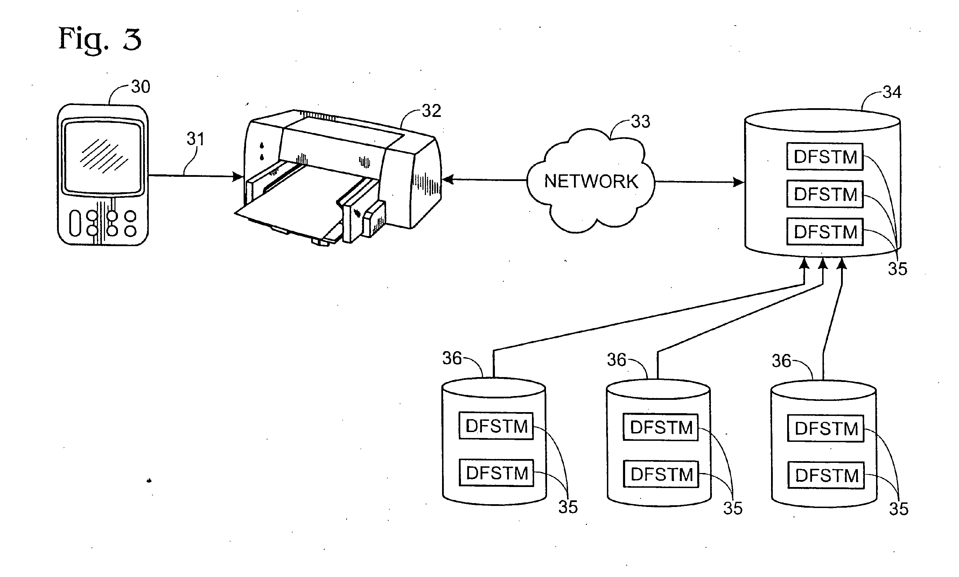

A printing system suitable for the present invention is shown in Fig. 3, including an electronic device 30 and a printer 32 that are linked via a connection 31. Electronic device 30 is optionally a portable electronic device, such as laptop computer, a personal digital assistant, an electronic organizer, or a cellular phone. The connection 31 is optionally a communications cable, as described above, or it is a modem connection, or a wireless communications link, such as an infrared connection or a radio connection. Alternatively, connection 31 occurs via a network, such as a local area network, a wide area network, or other communications link.

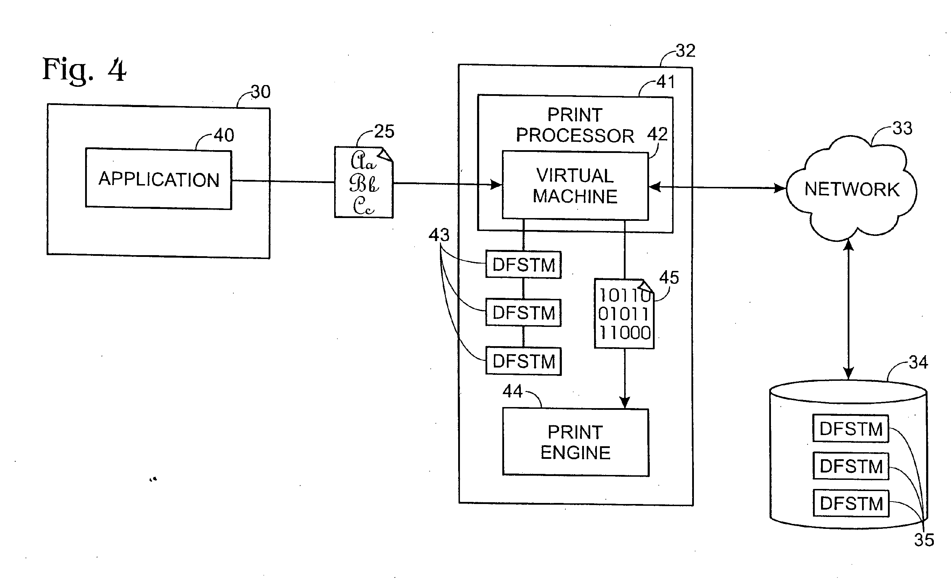

As shown in Fig. 4, the electronic device 30 does not utilize a printer driver to convert the electronic document into a printer-language format. Rather, application 40 sends the document 25 in a native format directly to a printer 32. The printer includes a print processor 41 and a print engine 44. The print processor receives the native format electronic document, identifies the native format of the document, and converts to a document 45 in a print-ready format. The print-ready formatted document is then sent to the print engine for printing.

To maximize the flexibility of the invention, the print processor may employ a virtual machine 42 to identify the native format of the received document, and to convert the document into a print-ready format. The virtual machine is a self-contained operating environment, executed by the print processor, that behaves as if it is a separate processor. The virtual machine can execute applications, modules, or programs written for the virtual machine, regardless of the printer hardware and printer software underlying the virtual machine. The virtual machine abstracts the details of the printer internals behind a standard interface. Because the programming interface is the same, hardware-dependent details become less of a concern for developers of modules or applications.

Typically, the virtual machine will identify the native format of the received electronic document 25 by searching for information present in the electronic document itself, typically in the form of a readily identified header field. As used herein, a header field is any information either embedded in the electronic document itself, or present at the beginning of the electronic document, or print job, that identifies at least the format of the electronic document, and optionally further identifies the application used to create or edit the electronic document, the author of the electronic document, the date the electronic document was created or edited, or any other electronic document-specific information that may be determined by the virtual machine upon receiving the electronic document.

Once the virtual machine has identified the format of the received electronic document, the virtual machine converts the electronic document to a print-ready format. The virtual machine typically utilizes a discrete program that is specific for the appropriate electronic document conversion. This discrete program is optionally referred to as an applet, a component, a servlet, or a plug-in. As used herein, the discrete conversion program executed by the virtual machine to effect the electronic document conversion will be referred to as a module, more specifically a translation module, and even more particularly, a document format-specific translation module (DFSTM). In order to be useful, each DFSTM must necessarily correspond to both the native format of the electronic document to be converted and the printer/print engine used to print the document.

The identification of the native format of the received electronic document triggers the print processor to search for a DFSTM that is appropriate for that native format and the printer/print engine to be used. If an appropriate DFSTM has been previously executed and stored in the printer itself, depicted as modules 43 in Fig. 4, the print processor executes the appropriate DFSTM to convert the electronic document 25. If an appropriate module is not available, for example if the electronic document 25 is in a native format that has not previously been identified by printer 32, the print processor could be programmed to initiate a search for an appropriate DFSTM.

It is advantageous to utilize a repository 34 to store multiple DFSTMs 35 corresponding to a wide variety of different document formats and printer/print engine combinations that may be required by the user of a given printer. In order to enhance the ease of use of the printing system, the repository may be in communication with the print processor 41, and therefore the virtual machine 42, via a network 33, where the network is optionally a local area network, or a wide area network such as the Internet.

The repository 34 is typically accessible via a network connection, and is maintained such that developers of either electronic devices, such as 30, or software applications suitable for use on such devices, may create DFSTMs suitable for their own particular devices and/or applications. Such developers are then encouraged to upload their individual DFSTMs from the developer databases 36 to the DFSTM repository 34, as shown in Fig. 3. Similarly, updated versions of a particular DFSTM, corresponding to a new version of an application or device, are also placed on the repository as they became available. Owners of electronic devices need no longer concern themselves with installing or updating printer drivers on their device. The first time a user initiates a print operation to a printer of the invention from a new application, the print processor recognizes that the received document is in a native format that has not been identified previously. The print processor then accesses the DFSTM repository, finds the appropriate DFSTM, downloads it to the print processor, and executes the module to convert the received document. The new DFSTM could then remain accessible to the print processor should it receive a document in that particular format in the future. As above, where the print processor employs a virtual machine for the document conversion, the virtual machine could contact the repository, search the repository, download the DFSTM and execute the DFSTM.

Where the print processor does not employ a virtual machine for the electronic document conversion, the DFSTM is typically written for a specific print processor operating system and printer internal environment. Where the print processor does employ a virtual machine for the electronic document conversion, the virtual machine is typically, but not exclusively, an interpreter for an object-oriented programming language. An example of a suitable object-oriented language is JAVA (Sun Microsystems). Additional virtual machines that are compatible with JAVA and are useful for the purposes of this invention, include but are not limited to CHAI (Hewlett-Packard), KAFFE (TransVirtual), LATTE (Seoul National University), and SABLEVM (Sable Research Group). Additionally useful virtual machines include DIS, a virtual machine for the INFERNO operating system (LIMBO compiler; Lucent Technologies). A variety of virtual machines appropriate for the invention are known to those of skill in the art, and could be implemented in the invention.

The particular selection of device, printer, print processor, virtual machine, or document format-specific translation module are a matter of choice for the skilled artisan. Accordingly, the present invention is intended to embrace all such alternatives, modifications and variances which fall within the scope of the appended claims.

## Claims

1. A printer, comprising, a print processor (41) that is configured to convert an electronic document from a native format (25) to a print-ready format.

2. The printer of claim 1, wherein the print processor (41) employs a virtual machine (42) and a translation module (43) to convert the electronic document (25).

3. A method of printing an electronic document, comprising the steps of: receiving (50) the electronic document (25) in a native format at a printer (32), the printer comprising a print processor (41) and a print engine (44); identifying (51) the native format of the electronic document (25); converting (52) the electronic document from the native format to a print-ready format compatible with the print engine (44) using the print processor (41); and sending (53) the electronic document in the print-ready format (45) to the print engine (44) for printing.

4. The method of claim 3, where the print processor (41) employs a virtual machine (42) and an appropriate document format-specific translation module (43) to convert the electronic document to the print-ready format.

5. The method of claim 3 or 4, where the print processor (41) is in communication with a repository (34) for document format-specific translation modules (35), further comprising: searching the repository (34) for an appropriate document format-specific translation module (35) for translating the document from the native format to the print-ready format; downloading the appropriate document format-specific translation module (35); and executing the appropriate document format-specific translation module (35).

6. The method of one of claims 3-5, where the electronic document (25) is a text document or an HTML document.

7. The method of one of claims 3-6, where the step of communicating the electronic document to the printer occurs via a wireless connection.

8. A printing system, comprising: an electronic device (30) including at least one electronic document (25) in a native format; and a printer (32) including a print processor (41), where the print processor is configured to receive the electronic document (25) in the native format, identify the native format of the electronic document, and execute an appropriate document format-specific translation module (43) to convert the electronic document (25) from the native format to the print-ready format.

9. The printing system of claim 8, further comprising a repository (34) for document format-specific translation modules, wherein the print processor (41) is further configured to query the repository (34) for the appropriate document format-specific translation module (35), and download the appropriate document format-specific translation module from the repository (34) before executing.

10. The printing system of claim 9, wherein both the print processor (41) and the repository (34) communicate via the Internet (33).
